# EUROPEAN PATENT SPECIFICATION

(11) **EP 4 199 170 B1**
(45) Date of publication and mention of the grant of the patent: **26.11.2025**
(21) Application number: 21880501.8
(22) Date of filing: 13.10.2021
(51) Int. Cl.: H01M 10/0569, H01M 10/0567, H01M 10/0525, H01M 10/42, H01M 4/587

(54) **NON-AQUEOUS ELECTROLYTE FOR LITHIUM SECONDARY BATTERY AND LITHIUM SECONDARY BATTERY COMPRISING THE SAME**
NICHTWÄSSRIGER ELEKTROLYT FÜR LITHIUMSEKUNDÄRBATTERIE UND LITHIUMSEKUNDÄRBATTERIE DENSELBEN UMFASSEND
ÉLECTROLYTE NON-AQUEUX POUR BATTERIE SECONDAIRE AU LITHIUM ET BATTERIE SECONDAIRE AU LITHIUM LE COMPRENANT

(30) Priority: 13.10.2020 KR 20200132055
(43) Date of publication of application: 21.06.2023
(73) Proprietor: LG Energy Solution, Ltd., Seoul 07335 (KR)
(72) Inventor: LEE, Jeong Beom, Daejeon 34122 (KR); KIM, Ye Eun, Daejeon 34122 (KR); KIM, Je Young, Daejeon 34122 (KR); KIM, Seok Koo, Daejeon 34122 (KR)
(74) Representative: Hoffmann Eitle
(86) International application number: PCT/KR2021/014107
(87) International publication number: WO 2022/080854

(56) References cited:
- WO-A1-2020/085811
- CN-A- 103 570 873
- CN-A- 104 900 916
- CN-A- 105 355 970
- CN-A- 108 270 034
- CN-A- 111 092 255
- KR-A- 20160 079 620
- KR-A- 20160 080 995
- KR-A- 20170 111 745
- KR-A- 20180 020 226
- KR-A- 20180 066 724
- US-A1- 2019 115 624

## Description

### TECHNICAL FIELD

The present invention relates to a non-aqueous electrolyte for a lithium secondary battery and a lithium secondary battery including the same.

### BACKGROUND ART

A lithium secondary battery is generally prepared by a method in which, after an electrode assembly is formed by disposing a separator between a positive electrode, which includes a positive electrode active material formed of a transition metal oxide containing lithium, and a negative electrode including a negative electrode active material capable of storing lithium ions and the electrode assembly is inserted into a battery case, a non-aqueous electrolyte that becomes a medium for transferring the lithium ions is injected thereinto and the battery case is then sealed.

Such lithium secondary batteries are used not only in portable electronic devices such as mobile phones or notebook computers, but also in electric vehicles, and demand for them is rapidly increasing. As the demand for the lithium secondary battery increases and application targets are diversified, a performance level required for the lithium secondary battery is also gradually increased. For example, an improvement in output characteristics is required for the lithium secondary battery used in the electric vehicle.

The output characteristics of the battery are a measure of how large a current may flow for a given voltage, wherein, in general, output obtainable from the battery when the current increases tends to increase initially and then decrease after reaching a maximum value. This is related to a polarization phenomenon, wherein this is because a battery voltage decreases when the current increases above a certain value, and capacity obtainable in a given voltage range is also reduced. Since the polarization phenomenon is related to a diffusion rate of the lithium ions and internal resistance of the battery, it is necessary to improve the diffusion rate of the lithium ions and electrical conductivity properties to improve the output characteristics of the battery.

As a method for improving the output characteristics of the battery, there is a method of improving the output characteristics of the battery by increasing a lithium ion yield (Li⁺ transference number) and a degree of dissociation of the lithium ions using an electrolyte containing a high concentration lithium salt, but, in this case, there is a problem in that electrode affinity and separator affinity of the electrolyte are decreased and viscosity and surface tension are increased.

Thus, there is a need to develop a lithium secondary battery capable of improving the above problem while using a high concentration lithium salt.

WO 2020/085811 A1 discloses a battery electrolyte comprising lithium bis(trifluoromethanesulfonyl)imide (LiTFSI) dissolved in an organic solvent composed of a mixture of propionitrile and 1H,1H,2'H,3H-decafluorodipropyl ether in a 3:7 weight ratio.

CN 108 270 034 A, KR 2016 0079620 A, CN 111 092 255 A, CN 105 355 970 A and CN 104 900 916 A all describe electrolyte compositions for lithium secondary batteries, comprising a lithium salt dissolved in a carbonate-containing solvent mixture including a hydrofluoroether (HFE) compound as co-solvent or additive, and further comprising a dinitrile compound, like succinonitrile or adiponitrile, as additive.

KR 2018 0020226 A and KR 2017 0111745 A also refer to the use of HFE compounds as co-solvent for electrolytic solutions including carbonate solvents.

KR 2018 0066724 A discloses a non-aqueous electrolyte prepared by dissolving lithium bis(fluorosulfonyl)imide (LiFSI) in acetonitrile to a high concentration, and then adding a fluorinated surfactant.

CN 103 570 873 A describes a composition for a gel polymer electrolyte, comprising (i) a non-aqueous organic solvent, (ii) an electrolyte salt, (iii) a specific trifunctional monomer, and optionally (iv) a fluoroalkyl (meth)acrylate compound as auxiliary monomer.

### DISCLOSURE OF THE INVENTION

### TECHNICAL PROBLEM

An aspect of the present invention provides a non-aqueous electrolyte for a lithium secondary battery and a lithium secondary battery including the same.

### TECHNICAL SOLUTION

According to an aspect of the present invention, there is provided a non-aqueous electrolyte for a lithium secondary battery which includes a compound represented by Formula 1; an organic solvent containing a nitrile-based solvent in an amount of 90 vol% to 100 vol%; and a lithium salt,

wherein an amount of the compound represented by Formula 1 is in a range of 2 wt% to 50 wt% based on a total weight of the non-aqueous electrolyte.

[Formula 1] R1-O-CH₂-R2

In Formula 1,
R1 and R2 are alkyl groups having 1 to 8 carbon atoms which are substituted with at least one fluorine.

According to another aspect of the present invention, there is provided a lithium secondary battery including: a positive electrode including a positive electrode active material; a negative electrode including a negative electrode active material; a separator disposed between the positive electrode and the negative electrode; and the non-aqueous electrolyte for a lithium secondary battery.

### ADVANTAGEOUS EFFECTS

A non-aqueous electrolyte for a lithium secondary battery according to the present invention may improve output characteristics by improving a performance degradation problem due to the use of a high concentration lithium salt.

Also, since the non-aqueous electrolyte has excellent electrode and separator impregnability and excellent flame retardant performance, a lithium secondary battery including the same has an effect of reducing activation process time and improving stability.

### BRIEF DESCRIPTION OF THE DRAWINGS

FIG. 1 illustrates photographs of evaluation of ignition of a non-aqueous electrolyte prepared in Example 5;
FIG. 2 illustrates results of thermal safety evaluation of a lithium secondary battery prepared in Example B-3;
FIG. 3 illustrates results of thermal safety evaluation of a lithium secondary battery prepared in Example B-5;
FIG. 4 illustrates results of thermal safety evaluation of a lithium secondary battery prepared in Comparative Example B-5; and
FIG. 5 illustrates voltage-capacity curves during a formation process of lithium secondary batteries prepared in Examples A-1 to A-3 and Comparative Examples A-3 and A-6.

### MODE FOR CARRYING OUT THE INVENTION

Hereinafter, the present invention will be described in more detail.

Recently, in order to improve performance and safety of a lithium secondary battery, an electrolyte, in which a concentration of a lithium salt is increased or a solvent is changed, has been developed. However, with respect to such an electrolyte, there is a disadvantage in that viscosity and surface tension are increased in comparison to those of an electrolyte using a carbonate-based solvent which is generally used.

If the viscosity and surface tension of the electrolyte are increased, since impregnability of a polyolefin-based separator widely used in the art and an electrode containing a polyvinylidene fluoride (PVdF) binder is decreased, activation process time is increased and a high-temperature aging process is added in a battery preparation process, and, thus, this leads to an increase in process cost.

Accordingly, the present inventors have not only improved ionic conductivity of an electrolyte by reducing viscosity of the electrolyte without changing a dissociation structure of a lithium salt in the electrolyte by including the compound represented by Formula 1 in the nitrile-based electrolyte with significantly improved safety, but have also significantly improved impregnability of an electrode and a separator by reducing surface tension of the electrolyte. Also, the present inventors have confirmed that introduction of a nitrile-based solvent has an effect of increasing safety of a cell in comparison to the conventional carbonate-based solvent.

### Non-aqueous Electrolyte

A non-aqueous electrolyte for a lithium secondary battery of the present invention includes a compound represented by Formula 1 below; an organic solvent containing a nitrile-based solvent in an amount of 90 vol% to 100 vol%; and a lithium salt,

wherein an amount of the compound represented by Formula 1 is in a range of 2 wt% to 50 wt% based on a total weight of the non-aqueous electrolyte.

[Formula 1] R1-O-CH₂-R2

In Formula 1,
R1 and R2 are alkyl groups having 1 to 8 carbon atoms which are substituted with at least one fluorine.

### (a) Compound Represented by Formula 1

In an embodiment of the present invention, R1 in Formula 1 may be an alkyl group having 1 to 5 carbon atoms which is substituted with at least one fluorine, and R2 may be an alkyl group having 2 to 6 carbon atoms which is substituted with at least one fluorine.

Specifically, R1 may be an alkyl group having 2 or 3 carbon atoms which is substituted with at least one fluorine, R2 may be an alkyl group having 3 to 5 carbon atoms which is substituted with at least one fluorine, and more specifically, R1 may be an ethyl group substituted with at least one fluorine, and R2 may be a butyl group substituted with at least one fluorine.

In an embodiment of the present invention, R1 may be -(CF₂)ₙCHF₂, and R2 may be -(CF₂)ₘCHF₂, wherein n may be an integer of 1 to 4, and m may be an integer of 2 to 5.

Specifically, n may be 1 or 2, m may be an integer of 2 to 4, and more specifically, n=1, and m=3.

In an embodiment of the present invention, a ratio of carbon atoms to fluorine atoms, which are included in each of R1 and R2, may be 1:2.

In an embodiment of the present invention, the compound represented by Formula 1 may be 1H, 1H, 5H-octafluoropentyl 1,1,2,2-tetrafluoroethyl ether represented by Formula 1A below.

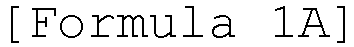

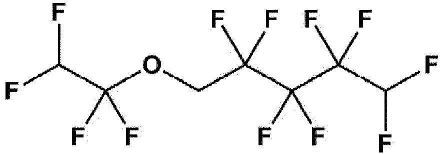

The amount of the compound represented by Formula 1 may be in a range of 2 wt% to 50 wt%, preferably 3 wt% to 30 wt%, and more preferably 3 wt% to 10 wt% based on the total weight of the non-aqueous electrolyte.

In a case in which the amount of the compound represented by Formula 1 is less than 2 wt%, since an effect of reducing the viscosity and surface tension of the electrolyte is insignificant, the impregnability of the electrode and the separator is not improved, and, in a case in which the amount of the compound represented by Formula 1 is greater than 50 wt%, since a concentration of the lithium salt is reduced to reduce ionic conductivity of the electrolyte, charging speed and output characteristics may be degraded when the electrolyte is used in the battery.

### (b) Compound Represented by Formula 2

The non-aqueous electrolyte for a lithium secondary battery of the present invention may further include a compound represented by the following Formula 2 which is a fluorine-based acrylate/methacrylate compound.

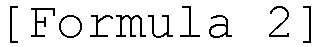

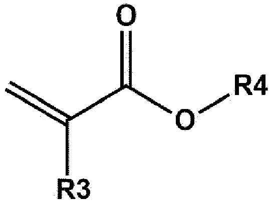

In [Formula 2],
R3 is hydrogen; or an alkyl group having 1 to 5 carbon atoms, and
R4 is an alkyl group having 1 to 10 carbon atoms which is substituted with at least one fluorine.

In a case in which the compound represented by Formula 2 is included in the non-aqueous electrolyte, the compound having a positive polarity may act as a surfactant to further improve the impregnability of the electrode and separator and the safety of the battery may be improved through an interfacial stabilization effect and a polymer curing reaction.

In an embodiment of the present invention, R3 may be hydrogen or a methyl group.

In an embodiment of the present invention, R4 may be -(CH₂)ₚ(CF₂)_{q}CHF₂, wherein p is an integer of 1 to 3, and q is an integer of 2 to 6.

In an embodiment of the present invention, the compound represented by Formula 2 may be one represented by Formula 2A or Formula 2B.

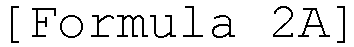

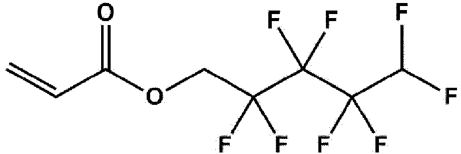

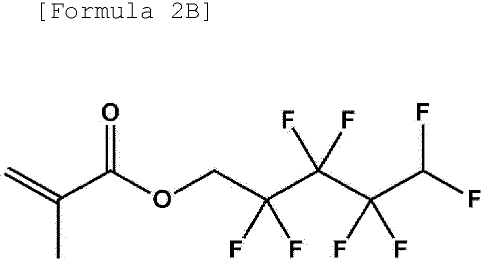

An amount of the compound represented by Formula 2 may be in a range of 0.1 wt% to 10 wt%, preferably 0.1 wt% to 5 wt%, and more preferably 0.1 wt% to 3 wt% based on the total weight of the non-aqueous electrolyte.

In a case in which the amount of the compound represented by Formula 2 is less than 0.1 wt%, an effect of improving the electrode and the separator is insignificant, and, in a case in which the amount of the compound represented by Formula 2 is greater than 10 wt%, the ionic conductivity of the electrolyte may be reduced.

### (C) Organic Solvent

The organic solvent of the present invention includes a nitrile-based solvent as an essential component. Herein, the nitrile-based solvent means an organic solvent containing a -C≡N functional group.

In an embodiment of the present invention, the nitrile-based solvent may be at least one selected from succinonitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, and may preferably be succinonitrile.

Since the succinonitrile may significantly improve safety of the electrolyte due to low volatility of the solvent, for example, it is present in the form of a solid at room temperature, it is most suitable as the solvent for the non-aqueous electrolyte of the present invention.

An amount of the nitrile-based solvent may be in a range of 90 vol% to 100 vol%, for example, 92 vol% to 100 vol% based on 100 vol% of the total organic solvent.

The organic solvent may be composed of the nitrile-based solvent alone or may further include a carbonate-based solvent. In a case in which the organic solvent is composed of the nitrile-based solvent alone, since volatility of the electrolyte is reduced, there is an advantage in that the safety of the battery may be improved, and, in a case in which the organic solvent further includes the carbonate-based solvent, since the impregnability of the electrode and separator is improved, there is an advantage in that a high energy density battery with ensured safety may be achieved.

In a case in which the carbonate-based solvent is included in the organic solvent, a volume ratio of the nitrile-based solvent to the carbonate-based solvent may be in a range of 90:10 to 97:3, preferably 90:10 to 93:7, and more preferably 90:10 to 92:8. In a case in which the volume ratio of the two solvents is included within the above range, it is desirable in terms of being able to ensure the safety of the battery and suppress corrosion of a current collector.

The carbonate-based solvent may be a non-fluorine-based cyclic carbonate-based solvent, a non-fluorine-based linear carbonate-based solvent, a fluorine-based cyclic carbonate solvent, a fluorine-based linear carbonate solvent, or a mixture thereof.

The non-fluorine-based cyclic carbonate-based solvent is an organic solvent which may well dissociate the lithium salt in the electrolyte due to high permittivity as a highly viscous organic solvent, may be at least one selected from ethylene carbonate (EC), propylene carbonate (PC), 1,2-butylene carbonate, 2,3-butylene carbonate, 1,2-pentylene carbonate, 2,3-pentylene carbonate, and vinylene carbonate, and specifically, may be ethylene carbonate and propylene carbonate.

Also, the non-fluorine-based linear carbonate-based solvent is an organic solvent having low viscosity and low permittivity, wherein the non-fluorine-based linear carbonate-based solvent may be at least one selected from dimethyl carbonate (DMC), diethyl carbonate (DEC), dipropyl carbonate, ethylmethyl carbonate (EMC), methylpropyl carbonate, and ethylpropyl carbonate, and may specifically be dimethyl carbonate, diethyl carbonate, and ethylmethyl carbonate.

The fluorine-based cyclic carbonate solvent may be at least one selected from fluoroethylene carbonate (FEC), difluoroethylene carbonate (DFEC), trifluoroethylene carbonate, tetrafluoroethylene carbonate, 3,3,3-trifluoropropylene carbonate, and 1-fluoropropylene carbonate, and specifically, may be fluoroethylene carbonate (FEC).

The fluorine-based linear carbonate solvent may be at least one selected from fluoromethyl methyl carbonate (FMMC) and fluoroethyl methyl carbonate (FEMC), and specifically, may be fluoroethyl methyl carbonate (FEMC).

A remainder except for the amounts of other components other than the organic solvent, for example, the compound represented by Formula 1, the compound represented by Formula 2, the lithium salt, and other additives to be described later, in the total weight of the non-aqueous electrolyte may be all organic solvent unless otherwise specified.

### (d) Lithium Salt

Any lithium salt typically used in an electrolyte for a lithium secondary battery may be used as the lithium salt without limitation, and, for example, a lithium salt including Li⁺ as a cation, and including at least one selected from F⁻, Cl⁻, Br⁻, I⁻, NO₃⁻, N(CN)₂⁻, BF₄⁻, ClO₄⁻, B₁₀Cl₁₀⁻, AlCl₄⁻, AlO₄⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, BF₂C₂O₄CHF-, PF₄C₂O₄⁻, PF₂C₄O₈⁻, PO₂F₂⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻, and SCN⁻ as an anion may be used.

Specifically, the lithium salt may be at least one selected from LiPF₆, LiClO₄, LiBF₄, lithium bis(fluorosulfonyl) imide (LiFSI), LiN(SO₂CF₃)₂ (LiTFSI), LiSO₃CF₃, LiPO₂F₂, lithium bis(oxalate)borate (LiBOB), lithium difluoro(oxalate)borate (LiDFOB), lithium difluoro(bisoxalato)phosphate (LiDFBP), lithium tetrafluoro(oxalate)phosphate (LiTFOP), and lithium fluoromalonato(difluoro) borate (LiFMDFB), and may be preferably at least one selected from LiFSI and lithium difluoro(oxalate)borate.

In an embodiment of the present invention, a concentration of the lithium salt in an organic solution composed of the organic solvent and the lithium salt may be in a range of 1.0 M to 6.0 M, preferably 1.3 M to 6.0 M, and more preferably 1.3 M to 2.4 M.

If the concentration of the lithium salt is less than 1.0 M, an effect of improving low-temperature output and cycle characteristics of the lithium secondary battery is insignificant, and, if the concentration of the lithium salt is greater than 6.0 M, electrolyte impregnability may be reduced as the viscosity and surface tension of the non-aqueous electrolyte are excessively increased.

In addition, the non-aqueous electrolyte of the present invention may include the high concentration lithium salt and the nitrile-based solvent as described above and may simultaneously maintain a viscosity of 5 cP to 15 cP. In a case in which the high concentration lithium salt and the nitrile-based solvent are included as described above, the viscosity is generally increased to 15 cP or more, but, in the present invention, since the high concentration lithium salt and the nitrile-based solvent are used while the compound represented by Formula 1 is included, the viscosity of 5 cP to 15 cP may be maintained.

### (e) Other Additives

The non-aqueous electrolyte for a lithium secondary battery of the present invention may optionally include additives in the non-aqueous electrolyte, if necessary, in order to prevent the non-aqueous electrolyte from being decomposed to cause collapse of an electrode in a high voltage environment, or further improve low-temperature high-rate discharge characteristics, high-temperature stability, overcharge protection, and a battery swelling suppression effect at high temperatures.

The additive in the non-aqueous electrolyte may be at least one selected from a cyclic carbonate-based compound, a halogen-substituted carbonate-based compound, a sultone-based compound, a sulfate-based compound, a phosphate-based or phosphite-based compound, a borate-based compound, a nitrile-based compound, an amine-based compound, a silane-based compound, a benzene-based compound, and a lithium salt-based compound.

The cyclic carbonate-based compound may be at least one selected from vinylene carbonate (VC) and vinyl ethylene carbonate, and may specifically be vinylene carbonate. In a case in which the cyclic carbonate-based compound is included as the additive, an amount of the cyclic carbonate-based compound may be in a range of less than 4 wt%, for example, 0.1 wt% to 3 wt% based on the total weight of the non-aqueous electrolyte.

The halogen-substituted carbonate-based compound may be fluoroethylene carbonate (FEC).

The sultone-based compound is a material capable of forming a stable solid electrolyte interphase (SEI) on a surface of a negative electrode by a reduction reaction, wherein the sultone-based compound may be at least one compound selected from 1,3-propane sultone (PS), 1,4-butane sultone, ethane sultone, 1,3-propene sultone (PRS), 1,4-butene sultone, and 1-methyl-1,3-propene sultone, and may specifically be 1,3-propane sultone (PS).

The sulfate-based compound is a material capable of forming a stable SEI that does not crack even during high-temperature storage by being electrically decomposed on the surface of the negative electrode, wherein the sulfate-based compound may be at least one selected from ethylene sulfate (Esa), trimethylene sulfate (TMS), or methyl trimethylene sulfate (MTMS).

The phosphate-based or phosphite-based compound may be at least one selected from lithium difluoro bis(oxalato)phosphate, lithium difluorophosphate, tetramethyl trimethylsilyl phosphate, trimethylsilyl phosphite, tris(2,2,2-trifluoroethyl)phosphate, and tris(trifluoroethyl)phosphite.

The borate-based compound may be lithium tetraphenylborate.

The nitrile-based compound may be at least one selected from succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, and may specifically be at least one selected from 2-fluorobenzonitrile, 4-fluorobenzonitrile, difluorobenzonitrile, and trifluorobenzonitrile which contain a fluorine element.

The amine-based compound may be at least one selected from triethanolamine and ethylenediamine, and the silane-based compound may be tetravinylsilane.

The benzene-based compound may be at least one selected from monofluorobenzene, difluorobenzene, trifluorobenzene, and tetrafluorobenzene.

The lithium salt-based compound is a compound different from the lithium salt included in the non-aqueous electrolyte, wherein the lithium salt-based compound may be at least one compound selected from LiPO₂F₂, LiBOB (lithium bis(oxalato)borate (LiB(C₂O₄)₂)), and lithium tetrafluoroborate (LiBF₄).

An amount of the additive may be in a range of 0.1 wt% to 10 wt%, for example, 1 wt% to 5 wt% based on the total weight of the non-aqueous electrolyte. In a case in which the amount of the additive is less than 0.1 wt%, an effect of improving low-temperature capacity of the battery and improving high-temperature storage characteristics and high-temperature life characteristics is insignificant, and, in a case in which the amount of the additive is greater than 10 wt%, there is a possibility that a side reaction in the electrolyte occurs excessively during charge and discharge of the battery. Particularly, if the excessive amount of the additives for forming an SEI is added, the additives for forming an SEI may not be sufficiently decomposed at high temperature so that they may be present in the form of an unreacted material or precipitates in the electrolyte at room temperature. Accordingly, a side reaction that degrades life or resistance characteristics of the battery may occur.

### Lithium Secondary Battery

Next, a lithium secondary battery according to the present invention will be described.

The lithium secondary battery according to the present invention includes a positive electrode including a positive electrode active material, a negative electrode including a negative electrode active material, a separator disposed between the positive electrode and the negative electrode, and a non-aqueous electrolyte, and, in this case, the non-aqueous electrolyte is the non-aqueous electrolyte for a lithium secondary battery according to the present invention. Since the non-aqueous electrolyte has been described above, a description thereof will be omitted and other components will be described below.

### (a) Positive Electrode

The positive electrode may be prepared by coating a positive electrode collector with a positive electrode material mixture slurry including a positive electrode active material, a binder, a conductive agent, and a solvent.

The positive electrode collector is not particularly limited so long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used.

The positive electrode active material is a compound capable of reversibly intercalating and deintercalating lithium, wherein the positive electrode active material may be at least one selected from LiNi_{1-x-y-z}CoₓM¹_{y}M²_{z}O₂ (where M¹ and M² are each independently any one selected from the group consisting of aluminum (Al), nickel (Ni), cobalt (Co), iron (Fe), manganese (Mn), vanadium (V), chromium (Cr), titanium (Ti), tungsten (W), tantalum (Ta), magnesium (Mg), and molybdenum (Mo), and x, y, and z are each independently atomic fractions of oxide composition elements, wherein 0≤x<0.5, 0≤y<0.5, 0≤z<0.5, and x+y+z=1) including LCO (LiCoO₂), LNO (LiNiO₂), LMO (LiMnO₂), LiMn₂O₄, LiCoPO₄, LFP (LiFePO₄), LiNiMnCoO₂, and NMC (LiNiCoMnO₂).

Specifically, the positive electrode active material may include a lithium metal oxide including lithium and at least one metal such as cobalt, manganese, nickel, or aluminum.

More specifically, the lithium metal oxide may be at least one selected from lithium-manganese-based oxide such as LiMnO₂ and LiMn₂O₄; lithium-cobalt-based oxide such as LiCoO₂; lithium-nickel-based oxide such as LiNiO₂; lithium-nickel-manganese-based oxide such as LiNi_{1-Y}Mn_{Y}O₂ (where 0<Y<1) and LiMn_{2-Z}Ni_{Z}O₄ (where 0<Z<2); lithium-nickel-cobalt-based oxide such as LiNi_{1-Y1}Co_{Y1}O₂ (where 0<Y1<1); lithium-manganese-cobalt-based oxide such as LiCo_{1-Y2}Mn_{Y2}O₂ (where 0<Y2<1) and LiMn_{2-Z1}Co_{Z1}O₄ (where 0<Z1<2); lithium-nickel-manganese-cobalt-based oxide such as Li (NiₚCo_{q}Mnᵣ₁)O₂ (where 0<p<1, 0<q<1, 0<r1<1, and p+q+r1=1) and Li (Niₚ₁Co_{q1}Mnᵣ₂)O₄ (where 0<p1<2, 0<q1<2, 0<r2<2, and p1+q1+r2=2); and lithium-nickel-cobalt-transition metal (M) oxide such as Li (Niₚ₂Co_{q2}Mnᵣ₃M_{S2})O₂ (where M is selected from the group consisting of Al, Fe, V, Cr, Ti, Ta, Mg, and Mo, and p2, q2, r3, and s2 are atomic fractions of each independent elements, wherein 0<p2<1, 0<q2<1, 0<r3<1, 0<S2<1, and p2+q2+r3+S2=1).

Among these materials, in terms of the improvement of capacity characteristics and stability of the battery, the lithium metal oxide may include LiCoO₂, LiMnO₂, LiNiO₂, lithium nickel manganese cobalt oxide (e.g., Li (Ni_{1/3}Mn_{1/3}Co_{1/3})O₂, Li(Ni_{0.6}Mn_{0.2}Co_{0.2})O₂, Li (Ni_{0.5}Mn_{0.3}Co_{0.2})O₂, Li(Ni_{0.7}Mn_{0.15}Co_{0.15})O₂, and Li(Ni_{0.8}Mn_{0.1}Co_{0.1})O₂); or lithium nickel cobalt aluminum oxide (e.g., LiNi_{0.8}Co_{0.15}Al_{0.05}O₂, etc.), and, in consideration of a significant improvement due to the control of type and content ratio of elements constituting the lithium metal oxide, the lithium metal oxide may be at least one selected from Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, and Li(Ni_{0.8}Mn_{0.1}Co_{0.1})O₂.

The positive electrode active material may be included in an amount of 60 wt% to 99 wt%, preferably 70 wt% to 99 wt%, and more preferably 80 wt% to 98 wt% based on a total weight of a solid content excluding the solvent in the positive electrode material mixture slurry.

The binder is a component that assists in the binding between the active material and the conductive agent and in the binding with the current collector.

Examples of the binder may be polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene (PE), polypropylene, an ethylene-propylene-diene monomer, a sulfonated ethylene-propylene-diene monomer, a styrene-butadiene rubber (SBR), a fluoro rubber, and various copolymers thereof.

The binder may be commonly included in an amount of 1 wt% to 20 wt%, preferably 1 wt% to 15 wt%, and more preferably 1 wt% to 10 wt% based on the total weight of the solid content excluding the solvent in the positive electrode material mixture slurry.

The conductive agent is a component for further improving the conductivity of the positive electrode active material.

Any conductive agent may be used without particular limitation so long as it has conductivity without causing adverse chemical changes in the battery, and, for example, a conductive material, such as: graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The conductive agent may be commonly included in an amount of 1 wt% to 20 wt%, preferably 1 wt% to 15 wt%, and more preferably 1 wt% to 10 wt% based on the total weight of the solid content excluding the solvent in the positive electrode material mixture slurry.

The solvent may include an organic solvent, such as N-methyl-2-pyrrolidone (NMP), and may be used in an amount such that desirable viscosity is obtained when the positive electrode active material as well as optionally the binder and the conductive agent is included. For example, the solvent may be included in an amount such that a concentration of a solid content including the positive electrode active material as well as optionally the binder and the conductive agent is in a range of 50 wt% to 95 wt%, preferably 50 wt% to 80 wt%, and more preferably 55 wt% to 70 wt%.

### (b) Negative Electrode

The negative electrode, for example, may be prepared by coating a negative electrode collector with a negative electrode material mixture slurry including a negative electrode active material, a binder, a conductive agent, and a solvent, or a graphite electrode which consists of carbon (C) or a metal itself may be used as the negative electrode.

For example, in a case in which the negative electrode is prepared by coating the negative electrode collector with the negative electrode material mixture slurry, the negative electrode collector generally has a thickness of 3 µm to 500 µm. The negative electrode collector is not particularly limited so long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, an aluminum-cadmium alloy, or the like may be used. Also, similar to the positive electrode collector, the negative electrode collector may have fine surface roughness to improve bonding strength with the negative electrode active material, and the negative electrode collector may be used in various shapes such as a film, a sheet, a foil, a net, a porous body, a foam body, a non-woven fabric body, and the like.

The negative electrode active material of the present invention does not include a lithium metal. The reason for this is that polymerization occurs when the nitrile-based solvent of the present invention is in contact with the lithium metal.

Also, the negative electrode active material of the present invention may consist of at least one selected from a carbon-based material; a silicon-based material; at least one metal selected from tin (Sn), zinc (Zn), Mg, cadmium (Cd), cerium (Ce), Ni, and Fe; alloys composed of the metals; oxides of the metals; and composites of the metals and carbon.

The carbon-based material may be at least one selected from crystalline carbon such as natural graphite and artificial graphite; and amorphous carbon such as soft carbon, hard carbon, mesophase pitch carbide, and sintered cokes.

The silicon-based material may be at least one selected from silicon (Si), SiOₓ (0<x<2), alloys composed of Si and the metals; and composites of Si and carbon.

The negative electrode active material may be included in an amount of 60 wt% to 99 wt%, preferably 70 wt% to 99 wt%, and more preferably 80 wt% to 98 wt% based on a total weight of a solid content excluding the solvent in the negative electrode material mixture slurry.

The binder is a component that assists in the binding between the conductive agent, the active material, and the current collector. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene monomer, a sulfonated ethylene-propylene-diene monomer, a styrene-butadiene rubber (SBR), a fluoro rubber, and various copolymers thereof.

The binder may be commonly included in an amount of 1 wt% to 20 wt%, preferably 1 wt% to 15 wt%, and more preferably 1 wt% to 10 wt% based on the total weight of the solid content excluding the solvent in the negative electrode material mixture slurry.

The conductive agent is a component for further improving conductivity of the negative electrode active material. Any conductive agent may be used without particular limitation so long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The conductive agent may be included in an amount of 1 wt% to 20 wt%, preferably 1 wt% to 15 wt%, and more preferably 1 wt% to 10 wt% based on the total weight of the solid content excluding the solvent in the negative electrode material mixture slurry.

The solvent may include water or an organic solvent, such as N-methyl-2-pyrrolidone (NMP), and may be used in an amount such that desirable viscosity is obtained when the negative electrode active material as well as optionally the binder and the conductive agent is included. For example, the solvent may be included in an amount such that a concentration of a solid content including the negative electrode active material as well as optionally the binder and the conductive agent is in a range of 50 wt% to 95 wt%, for example, 70 wt% to 90 wt%.

In a case in which the metal itself is used as the negative electrode, the negative electrode may be prepared by a method of physically bonding, rolling, or depositing a metal on a metal thin film itself or the negative electrode collector. The depositing method may use an electrical deposition method or chemical deposition method of metal.

For example, the metal bonded/rolled/deposited on the metal thin film itself or the negative electrode collector may include one metal selected from the group consisting of nickel (Ni), tin (Sn), copper (Cu), and indium (In) or an alloy of two metals thereof.

### (C) Separator

The lithium secondary battery according to the present invention includes a separator between the positive electrode and the negative electrode.

The separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used.

Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used as the separator. Also, a typical porous nonwoven fabric, for example, a nonwoven fabric formed of high melting point glass fibers or polyethylene terephthalate fibers may be used. Furthermore, a separator coated with or including a ceramic component or a polymer material in the form of a film, a fiber, or powder may be used to secure heat resistance or mechanical strength, and the separator having a single layer or multilayer structure may be used.

The lithium secondary battery according to the present invention as described above may be suitably used in portable devices, such as mobile phones, notebook computers, and digital cameras; and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); and a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Hereinafter, the present invention will be described in detail, according to specific examples.

### <Examples: Preparation of Lithium Secondary Battery>

### (1) Preparation of Non-aqueous Electrolyte

**[Table 1]**

| | Organic solution | | | | | Amount of compound represented by Formula 1 or 2 (wt%) | | |
|---|---|---|---|---|---|---|---|---|
| | Concentrati on of lithium salt | | Composition of solvent (vol%) | | | | | |
| | LIFSI | LIDFO B | Succin onitri le | Ethylm ethyl carbon ate | Triflu oroeth ylmeth yl carbon ate | Formul a 1A | Formul a 2A | Formu la 2B |
| Example 1 | 1.3 M | - | 100 | - | - | 5 | - | - |
| Example 2 | 1.3 M | - | 100 | - | - | 10 | - | - |
| Example 3 | 0.9 M | 0.4 M | 100 | - | - | 5 | - | - |
| Example 4 | 1.4 M | - | 93 | 7 | - | 3 | - | - |
| Example 5 | 1.2 M | 0.2 M | 93 | 7 | - | 3 | - | - |
| Example 6 | 1.2 M | - | 92 | - | 8 | 3 | - | - |
| Example 7 | 1.2 M | 0.2 M | 93 | 7 | - | 3 | 1 | - |
| Example 8 | 1.2 M | 0.2 M | 93 | 7 | - | 3 | - | 1 |

Mixed organic solvents were prepared according to compositions of Table 1, and organic solutions were prepared by mixing a lithium salt so as to obtain concentrations of Table 1. Based on 100 wt% of a non-aqueous electrolyte, the compound represented by Formula 1A (amount in Table 1), the compound represented by Formula 2A or 2B (amount in Table 1), 3 wt% of vinylene carbonate, 0.5 wt% of 1,3-propanesultone (PS), and the organic solution, as a remainder, were mixed to prepare the non-aqueous electrolyte for a lithium secondary battery.

### (2) Preparation of Normal Loading Electrode

A positive electrode active material (LiNi_{0.8}Co_{0.1}Mn_{0.1}O₂; NCM811), a conductive agent (carbon black), and a binder (polyvinylidene fluoride) were added to N-methyl-2-pyrrolidone (NMP) in a weight ratio of 96.8:1.0:2.2 to prepare a positive electrode slurry. A 20 µm thick aluminum (Al) thin film, as a positive electrode collector, was coated with the positive electrode slurry to a thickness of 45 µm, dried, and then roll-pressed to prepare a positive electrode having a loading amount of 2.8 mAh/cm².

A negative electrode active material (graphite), a binder (SBR-CMC), and a conductive agent (carbon black) were added to water, as a solvent, in a weight ratio of 95.3:4.0:0.7 to prepare a negative electrode slurry. A 8 µm thick copper (Cu) thin film, as a negative electrode collector, was coated with the negative electrode slurry to a thickness of 67 µm, dried, and then roll-pressed to prepare a negative electrode having a loading amount of 3.0 mAh/cm².

### (3) Preparation of High Loading Electrode

A positive electrode active material (LiNi_{0.8}Co_{0.1}Mn_{0.1}O₂; NCM811), a conductive agent (carbon black), and a binder (polyvinylidene fluoride) were added to N-methyl-2-pyrrolidone (NMP) in a weight ratio of 96.8:1.0:2.2 to prepare a positive electrode slurry. A 20 µm thick aluminum (Al) thin film, as a positive electrode collector, was coated with the positive electrode slurry to a thickness of 76 µm, dried, and then roll-pressed to prepare a positive electrode having a loading amount of 4.8 mAh/cm².

A negative electrode active material (graphite), a binder (SBR-CMC), and a conductive agent (carbon black) were added to water, as a solvent, in a weight ratio of 95.3:4.0:0.7 to prepare a negative electrode slurry. A 8 µm thick copper (Cu) thin film, as a negative electrode collector, was coated with the negative electrode slurry to a thickness of 107 µm, dried, and then roll-pressed to prepare a negative electrode having a loading amount of 5.2 mAh/cm².

### (4) Preparation of Lithium Secondary Battery

### (Preparation of Battery Using the Normal Loading Electrode)

The normal loading positive electrode, a polyolefin-based porous separator coated with inorganic particles (Al₂O₃), and the normal loading negative electrode were sequentially stacked to prepare an electrode assembly.

The assembled electrode assembly was accommodated in a pouch-type battery case, and each of the non-aqueous electrolytes for a lithium secondary battery of Examples 1 to 8 prepared in (1) was injected to prepare each of lithium secondary batteries of Examples A-1 to A-8 in which the normal loading electrodes were used.

### (Preparation of Battery Using the High Loading Electrode)

Lithium secondary batteries of Examples B-1 to B-8, in which the high loading electrodes were used, were prepared in the same manner as above except that the high loading positive electrode, instead of the normal loading positive electrode, and the high loading negative electrode, instead of the normal loading negative electrode, were used.

### <Comparative Examples: Preparation of Lithium Secondary Battery>

### (1) Preparation of Non-aqueous Electrolyte

**[Table 2]**

| | Organic solution | | | | | | | Amount of additive compound (wt%) | | | |
|---|---|---|---|---|---|---|---|---|---|---|---|
| | Concentration of lithium salt | | | Solvent volume ratio (vol%) | | | | | | | |
| | LIFS I | LiPF 6 | LIDF OB | Succ inon itri le | Ethy lmet hyl carb onat e | Fluo roet hyle ne carb onat e | Ethy lene carb onat e | Form ula 1A | MPPB FSI* | Form ula 2A | Form ula 2B |
| Comparati ve Example 1 | 1.3 M | - | - | 100 | - | - | - | - | - | - | - |
| Comparati ve Example 2 | 1.3 M | - | - | 100 | - | - | - | 60 | - | - | - |
| Comparati ve Example 3 | 1.4 M | - | - | 93 | 7 | - | - | - | - | - | - |
| Comparati ve Example 4 | 1.3 M | - | - | 30 | 70 | - | - | 5 | - | - | - |
| Comparati ve Example 5 | 0.5 M | 0.7 M | - | - | 70 | 10 | 20 | 5 | - | - | - |
| Comparati ve Example 6 | 0.5 M | 0.7 M | - | - | 70 | 10 | 20 | 5 | 3 | - | - |
| Comparati ve Example 7 | 1.2 M | - | 0.2 M | 93 | 7 | - | - | - | - | 1 | - |
| Comparati ve Example 8 | 1.2 M | - | 0.2 M | 93 | 7 | - | - | - | - | - | 1 |

| | | | | | | | | | | | |
|---|---|---|---|---|---|---|---|---|---|---|---|
| *MPPBFSI: 1-methyl-1-(3-methoxypropyl)pyrrolidinium bisfluorosulfonylimide | | | | | | | | | | | |

Mixed organic solvents were prepared according to compositions of Table 2, and organic solutions were prepared by mixing a lithium salt so as to obtain concentrations of Table 2. Based on 100 wt% of a non-aqueous electrolyte, the additive compound according to Table 2, 3 wt% of vinylene carbonate, 0.5 wt% of 1,3-propanesultone (PS), and the organic solution, as a remainder, were mixed to prepare the non-aqueous electrolyte for a lithium secondary battery.

### (2) Preparation of Normal Loading Electrode

A positive electrode and a negative electrode were prepared in the same manner as in the preparation process of the normal loading electrode of the above embodiment.

### (3) Preparation of High Loading Electrode

A positive electrode and a negative electrode were prepared in the same manner as in the preparation process of the high loading electrode of the above embodiment.

### (4) Preparation of Lithium Secondary Battery

### (Preparation of Battery Using the Normal Loading Electrode)

The normal loading positive electrode, a polyolefin-based porous separator coated with inorganic particles (Al₂O₃), and the normal loading negative electrode were sequentially stacked to prepare an electrode assembly.

The assembled electrode assembly was accommodated in a pouch-type battery case, and each of the non-aqueous electrolytes for a lithium secondary battery of Comparative Examples 1 to 8 prepared in (1) was injected to prepare each of lithium secondary batteries of Comparative Examples A-1 to A-8 in which the normal loading electrodes were used.

### (Preparation of Battery Using the High Loading Electrode)

Lithium secondary batteries of Comparative Examples B-1 to B-8, in which the high loading electrodes were used, were prepared in the same manner as above except that the high loading positive electrode, instead of the normal loading positive electrode, and the high loading negative electrode, instead of the normal loading negative electrode, were used.

### <Experimental Examples>

### Experimental Example 1: Evaluation of Ionic Conductivity of Electrolyte

Ionic conductivities of the non-aqueous electrolytes prepared in Examples 1 to 5, 7, and 8 and Comparative Examples 1 to 3 were measured at 25°C using a Seven Excellence S700 instrument by METTLER TOLEDO. Specifically, after each of the electrolytes of Examples 1 to 5, 7, and 8 and Comparative Examples 1 to 3 was filled in a bath so that a probe for measuring ion conductivity was immersed, the ion conductivity was measured through the immersed probe. Ionic conductivity values measured were listed in Table 3 below.

**[Table 3]**

| Ionic conductivity [mS/cm, 25°C] | | | | | | | | | |
|---|---|---|---|---|---|---|---|---|---|
| Exampl e 1 | Exampl e 2 | Exampl e 3 | Exampl e 4 | Exampl e 5 | Exampl e 7 | Exampl e 8 | Compar ative Exampl e 1 | Compar ative Exampl e 2 | Compar ative Exampl e 3 |
| 5.88 | 5.64 | 4.98 | 5.96 | 5.36 | 5.21 | 5.27 | 4.79 | Occurr ence of phase separa tion | 4.35 |

From the results of Table 3, it may be confirmed that the ionic conductivities of the nitrile-based electrolytes (Examples 1 to 5, 7, and 8) to which the additive of Formula 1A was added were higher than the ionic conductivities of the nitrile-based electrolytes (Comparative Examples 1 and 3) to which the additive of Formula 1A was not added. Also, with respect to Comparative Example 2 to which the additive of Formula 1A was excessively added (60 wt%), it may be confirmed that Comparative Example 2 was difficult to be used as an electrolyte because the additive of Formula 1A was phase separated.

### Experimental Example 2: Evaluation of Separator Impregnability of Electrolyte

Separator impregnabilities of the non-aqueous electrolytes prepared in Examples 3 to 5, 7, and 8 and Comparative Examples 1, 3, and 5 to 8 were measured at 25°C using a 2032 coin cell having a diameter of 20 mm and a thickness of 3.2 mm. Specifically, a separator, in which Al₂O₃ and PVdF were coated on both sides of a polyethylene fabric, was punched out to a diameter of 18 mm, impregnated with each electrolyte for 24 hours, and inserted between the coin cells to assemble a cell. Alternating current (AC) impedance of the assembled coin cell was measured using an electrochemical impedance spectroscopy (EIS) device (Biologic potentiostat), and film ionic conductivity of the electrolyte-impregnated separator was measured. An expression rate was calculated by dividing the measured film ionic conductivity by the ionic conductivity of the electrolyte. The expression rate is an index indicating how much the electrolyte is impregnated into the separator, wherein a high value indicates that the impregnation of the separator with the electrolyte is excellent. Expression rate values measured were listed in Table 4 below.

**[Table 4]**

| Separator expression rate [%] (Separator impregnability) | | | | | | | | | | |
|---|---|---|---|---|---|---|---|---|---|---|
| Examp le 3 | Examp le 4 | Examp le 5 | Examp le 7 | Examp le 8 | Compa rativ e Examp le 1 | Compa rativ e Examp le 3 | Compa rativ e Examp le 5 | Compa rativ e Examp le 6 | Compa rativ e Examp le 7 | Compa rativ e Examp le 8 |
| 6.8 | 7.9 | 8.6 | 8.5 | 8.6 | 0.0 | 2.3 | 6.7 | 2.9 | 1.9 | 2.0 |

From the results of Table 4, it may be confirmed that expression rates of the nitrile-based electrolytes (Examples 3 to 5, 7, and 8) to which the additive of Formula 1A was added were higher than expression rates of the nitrile-based electrolytes (Comparative Examples 1 and 3) to which the additive of Formula 1A was not added. Particularly, it may be confirmed that the electrolyte (Comparative Example 1), in which the additive of Formula 1A was not used while 100% of the nitrile-based solvent was used, did not impregnate the separator at all.

However, in a case in which the additive of Formula 1A was included, it may be confirmed through this experimental example that, even if 100% of the nitrile-based solvent was used (Example 3), it may ensure more than a separator impregnation level of the electrolyte (Comparative Example 5) in which the carbonate-based solvent mainly used in a conventional lithium secondary battery was used.

Also, in a case in which the pyrrolidinium compound was included in the carbonate-based solvent, it may be confirmed that the impregnability was reduced as in Comparative Example 6. Furthermore, with respect to Comparative Examples 7 and 8, it may be confirmed that the impregnabilities were reduced because Formula 1A was not used as the additive even though the fluorine-based acrylate and methacrylate compounds (Formula 2A or 2B) were used.

### Experimental Example 3: Evaluation of Positive Electrode Impregnability of Electrolyte

Positive electrode impregnabilities of the non-aqueous electrolytes prepared in Examples 1 to 5, 7, and 8 and Comparative Examples 1 and 3 were measured at 25°C using a contact angle meter (drop shape analysis system, DSA100). Specifically, after 5 *µ*ℓ of each non-aqueous electrolyte was dropped on a surface of the high loading positive electrode, an angle between the surface of the positive electrode and the electrolyte droplet was measured. The contact angle is an index indicating positive electrode affinity of the electrolyte, wherein a low value indicates excellent positive electrode impregnability of the electrolyte. The contact angles measured were listed in Table 5 below.

**[Table 5]**

| Positive electrode contact angle [°] (Positive electrode impregnability) | | | | | | | | |
|---|---|---|---|---|---|---|---|---|
| Exampl e 1 | Exampl e 2 | Exampl e 3 | Exampl e 4 | Exampl e 5 | Exampl e 7 | Exampl e 8 | Compar ative Exampl e 1 | Compar ative Exampl e 3 |
| 25.8 | 23.7 | 16.3 | 10.8 | 9.2 | 9.0 | 8.5 | 36.7 | 30.1 |

From the results of Table 5, it may be confirmed that positive electrode contact angles of the nitrile-based electrolytes (Examples 1 to 5, 7, and 8) to which the additive of Formula 1A was added were lower than positive electrode contact angles of the nitrile-based electrolytes (Comparative Examples 1 and 3) in which the additive of Formula 1A was not included. Particularly, it may be understood that the positive electrode impregnabilities of Examples 7 and 8 containing the fluorine-based acrylate and methacrylate compounds (Formula 2A or Formula 2B) were more improved. Accordingly, it may be confirmed that the positive electrode impregnability was improved when the compound represented by Formula 1 was added to the nitrile-based electrolyte and the effect was further increased when the compound represented by Formula 2 was added.

### Experimental Example 4: Evaluation of Flame Retardancy of Electrolyte

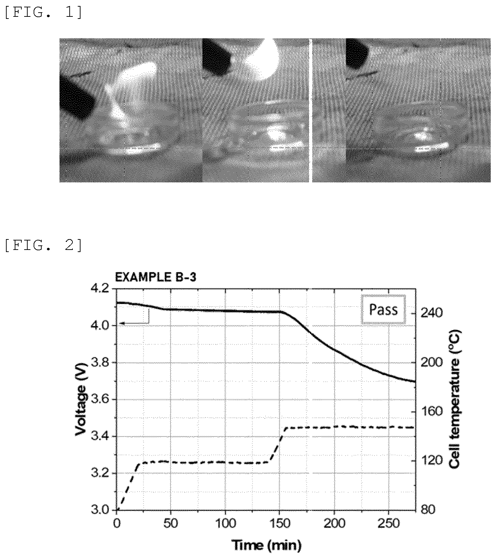

Flame retardancy of the electrolyte was evaluated by a method of bring a flame into contact with the electrolyte. Specifically, after 1 mL of each of the non-aqueous electrolytes prepared in Examples 1 to 8 and Comparative Examples 4 to 6 was put in a separate Petri dish and was in contact with a lighter flame for 3 seconds, whether or not the electrolyte was ignited was checked. The occurrence of ignition is as shown in Table 6, and pictures taken in chronological order of an ignition evaluation process of Example 5 are illustrated in FIG. 1.

**[Table 6]**

| Examp le 1 | Examp le 2 | Examp le 3 | Examp le 4 | Examp le 5 | Examp le 6 | Examp le 7 | Examp le 8 | Compa rativ e Examp le 4 | Compa rativ e Examp le 5 | Compa rativ e Examp le 6 |
|---|---|---|---|---|---|---|---|---|---|---|
| No ignit ion | No ignit ion | No ignit ion | No ignit ion | No ignit ion | No ignit ion | No ignit ion | No ignit ion | Ignit ion | Ignit ion | Ignit ion |

From the results of Table 6, it may be confirmed that flame retardancy of the electrolytes was ensured in the electrolytes (Examples 1 to 8) containing 90 vol% or more of the nitrile-based solvent, but it may be confirmed that ignition occurred because flame retardancy of the electrolytes was not ensured in the electrolytes (Comparative Examples 4 to 6) containing less than 50 vol% of the nitrile-based solvent.

In FIG. 1, it may be visually confirmed that the electrolyte of Example 5 was not ignited even if it was in contact with a flame.

### Experimental Example 5: Cell Resistance Evaluation

After the lithium secondary batteries of Examples A-1 to A-5, A-7, and A-8 and Comparative Examples A-1, A-3, and A-6 to A-8 were impregnated by being stored in an oven at 25°C for 24 hours, cell resistance was measured with a 1 kHz resistance tester (Hioki), and the results thereof are listed in Table 7 below.

**[Table 7]**

| Cell resistance evaluation [mOhm] | | | | | | | | | | | |
|---|---|---|---|---|---|---|---|---|---|---|---|
| Examp le A-1 | Examp le A-2 | Examp le A-3 | Examp le A-4 | Examp le A-5 | Examp le A-7 | Examp le A-8 | Compa rativ e Examp le A-1 | Compa rativ e Examp le A-3 | Compa rativ e Examp le A-6 | Compa rativ e Examp le A-7 | Compa rativ e Examp le A-8 |
| 0.23 | 0.27 | 0.26 | 0.22 | 0.23 | 0.24 | 0.23 | ∞ | 0.38 | 0.36 | ∞ | ∞ |

From the results of Table 7, it may be confirmed that cell resistances of Examples A-1 to A-5, A-7, and A-8 including the electrolytes (Examples 1 to 5, 7, and 8), in which the additive of Formula 1A was included, were lower than cell resistances of Comparative Examples A-1, A-3, A-7, and A-8 including the electrolytes (Comparative Examples 1, 3, 7, and 8), in which the additive of Formula 1A was not included, and cell resistance of Comparative Example A-6 including the electrolyte (Comparative Example 6) that further included the pyrrolidinium compound.

Particularly, with respect to Comparative Examples A-1, A-7, and A-8 including the electrolytes of Comparative Examples 1, 7, and 8 in which 100 vol% of the nitrile-based solvent was included and the additive of Formula 1A was not included, since the resistance was so high that the cell resistance may not be measured, it may be confirmed that operation of the cell was not possible. Accordingly, it may be understood that, when the nitrile-based solvent was used, the use of the compound represented by Formula 1 had a great effect on reducing the cell resistance.

### Experimental Example 6: Evaluation of Thermal Safety of Cell

After a formation process was performed by charging each of the lithium secondary batteries of Examples B-3 and B-5 and Comparative Example B-5 at 0.1 C rate for 3 hours to a state of charge (SOC) of 30% at 25°C, a degassing process was performed after aging for 24 hours. Each lithium secondary battery after degassing was charged at 0.1 C rate to 4.2 V under a constant current-constant voltage (CC-CV) condition at 25°C, and discharged at 0.1 C rate to 3.0 V under a CC condition. The above charging and discharging were set as one cycle and 2 cycles of initial charge and discharge were performed.

Thermal safety evaluation of the cell was performed in such a manner that each of the initially charged and discharged lithium secondary batteries was charged at 0.1 C rate to 4.2 V under a CC-CV condition and was put in a high-temperature heat exposure chamber, the temperature was increased to 120°C at a rate of 2°C/min and was then maintained for 2 hours, and the temperature was again increased to 150°C at a rate of 2°C/min and was then maintained for 2 hours.

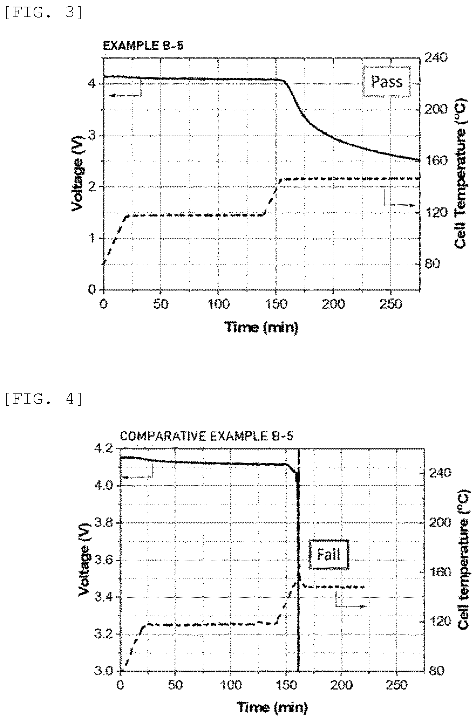

The evaluation result of Example B-3 is illustrated in FIG. 2, the evaluation result of Example B-5 is illustrated in FIG. 3, the evaluation result of Comparative Example B-5 is illustrated in FIG. 4, and the summarized results are as shown in Table 8.

**[Table 8]**

| | | | |
|---|---|---|---|
| Thermal safety evaluation (Hot-box) | Example B-3 | Example B-5 | Comparative Example B-5 |
| | pass | pass | fail |

Through the comparison of FIGS. 2 and 3 with FIG. 4, it may be confirmed that, with respect to a case (Example B-3) in which the nitrile-based solvent was used, safety at high temperatures was improved in comparison to a case (Comparative Example B-5) in which the carbonate-based solvent was used, even if the amount of Formula 1A was the same. Also, in a case in which the amount of the nitrile-based solvent was 50 vol% or more even if the carbonate-based solvent was used together, it may be confirmed that excellent high-temperature safety may be ensured as in Example B-5.

### Experimental Example 7: Life Characteristics Evaluation (Normal Loading Electrode)

After a formation process was performed by charging each of the lithium secondary batteries prepared in Examples A-1 to A-3 and Comparative Example A-3 and A-6 at 0.1 C rate for 3 hours to an SOC of 30% at 25°C, a degassing process was performed after aging for 24 hours. Each lithium secondary battery after degassing was charged at 0.1 C rate to 4.2 V under a constant current-constant voltage (CC-CV) condition at 25°C, and discharged at 0.1 C rate to 3.0 V under a CC condition. The above charging and discharging were set as one cycle and 2 cycles of initial charge and discharge were performed.

Subsequently, each of the initially charged and discharged lithium secondary batteries was charged at 0.1 C rate to 4.2 V under a CC-CV condition, and discharged at 0.5 C rate to 3.0 V under a CC condition. The above charging and discharging were set as one cycle and 100 cycles were performed at 25°C.

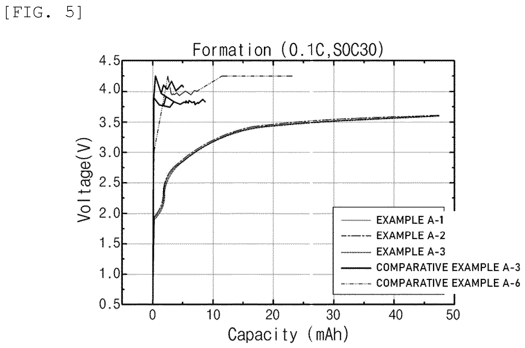

Voltage-capacity curves during the formation process are illustrated in FIG. 5 below. With respect to the charge and discharge cycle, discharge capacity was measured at every cycle, and a measured value was substituted into Equation 1 below to calculate a capacity retention. The results thereof are presented in Table 9 below. Capacity retention (%) = (discharge capacity in every cycle / discharge capacity after initial charge and discharge) × 100

**[Table 9]**

| Life performance (normal loading, room temperature, 100^{th} cycle capacity retention) | | | | |
|---|---|---|---|---|
| Example A-1 | Example A-2 | Example A-3 | Comparative Example A-3 | Comparative Example A-6 |
| 94% | 87% | 95% | Not measurable | Not measurable |

Referring to FIG. 5, it may be confirmed that, with respect to Comparative Examples A-3 and A-6, the cells were not operated while an overvoltage was very large during the activation process. The reason for this was that, since the battery of Comparative Example A-3 included the nitrile-based electrolyte that did not include the additive of Formula 1A, separator and positive electrode impregnability was low to increase the resistance of the cell, and, as a result, cell operation was not possible. With respect to Comparative Example A-6, it may be confirmed that, since the pyrrolidinium compound was added to the electrolyte to reduce the separator impregnability, the cell resistance was increased, and, as a result, cell operation was not possible. In contrast, with respect to the batteries (Examples A-1 to A-3) in which the nitrile-based electrolyte containing the additive of Formula 1A was used, it may be confirmed that the activation process was smoothly performed.

Referring to Table 9, it may be confirmed that cell life performances of Examples A-1 to A-3 were excellent. With respect to Comparative Examples A-3 and A-6, since the cell operation was not possible as described above, it was not possible to measure a capacity retention.

### Experimental Example 8: Life Characteristics Evaluation (High Loading Electrode)

For the lithium secondary batteries of Examples B-4 to B-8 and Comparative Examples B-3, B-4, and B-6 to B-8, capacity retention was evaluated in the same manner as in Experimental Example 7. Also, capacity retention was evaluated in the same way at 45°C, and the results thereof are listed in Table 10 below.

**[Table 10]**

| | Examp le B-4 | Examp le B-5 | Examp le B-6 | Examp le B-7 | Examp le B-8 | Compa rativ e Examp le B-3 | Compa rativ e Examp le B-4 | Compa rativ e Examp le B-6 | Compa rativ e Examp le B-7 | Compa rativ e Examp le B-8 |
|---|---|---|---|---|---|---|---|---|---|---|
| Life performa nce (high loading, room temperat ure, 100^{th} cycle capacity retentio n) | 92% | 94% | 90% | 89% | 95% | Not measu rable | 47% | Not measu rable | Not measu rable | Not measu rable |
| Life performa nce (high loading, 45°C, 100^{th} cycle capacity retentio n) | 90% | 88% | 87% | 83% | 90% | Not measu rable | 33% | Not measu rable | Not measu rable | Not measu rable |

With respect to Comparative Examples B-3 and B-6, since cell operation was not possible from the activation process as in Experimental Example 7, life characteristics may not be evaluated. With respect to Comparative Examples B-7 and B-8, since the additive of Formula 1A was not included even though the fluorine-based acrylate and methacrylate compounds (Formula 2A or 2B) were added, the impregnability of the electrode and separator was low, and thus, cell operation was not possible. With respect to Comparative Example B-4, the activation process was performed, but it may be confirmed that life performance was significantly lower than those of Examples B-4 to B-6 as may be seen in Table 10. It was confirmed that the performance degradation of Comparative Example B-4 was due to increased aluminum corrosiveness as the electrolyte contained less than 50 vol% of the nitrile-based solvent.

## Claims

1. A non-aqueous electrolyte for a lithium secondary battery, comprising:
a compound represented by Formula 1;
an organic solvent containing a nitrile-based solvent in an amount of 90 vol% to 100 vol%; and
a lithium salt,
wherein an amount of the compound represented by Formula 1 is in a range of 2 wt% to 50 wt% based on a total weight of the non-aqueous electrolyte:
[Formula 1] R1-O-CH₂-R2
wherein, in Formula 1,
R1 and R2 are alkyl groups having 1 to 8 carbon atoms which are substituted with at least one fluorine.

2. The non-aqueous electrolyte for a lithium secondary battery of claim 1, wherein R1 is an alkyl group having 1 to 5 carbon atoms which is substituted with at least one fluorine, and R2 is an alkyl group having 2 to 6 carbon atoms which is substituted with at least one fluorine.

3. The non-aqueous electrolyte for a lithium secondary battery of claim 1, wherein R1 is -(CF₂)ₙCHF₂, and
R2 is -(CF₂)ₘCHF₂,
wherein n is an integer of 1 to 4, and
m is an integer of 2 to 5.

4. The non-aqueous electrolyte for a lithium secondary battery of claim 1, wherein the compound represented by Formula 1 is one represented by Formula 1A:

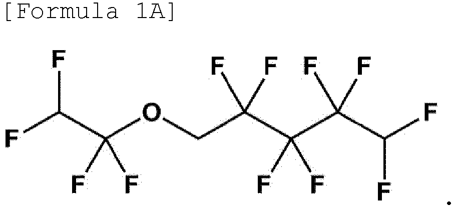

5. The non-aqueous electrolyte for a lithium secondary battery of claim 1, wherein the amount of the compound represented by Formula 1 is in a range of 3 wt% to 30 wt% based on the total weight of the non-aqueous electrolyte.

6. The non-aqueous electrolyte for a lithium secondary battery of claim 1, further comprising a compound represented by Formula 2: 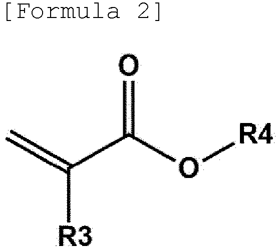 wherein, in Formula 2,
R3 is hydrogen; or an alkyl group having 1 to 5 carbon atoms, and
R4 is an alkyl group having 1 to 10 carbon atoms which is substituted with at least one fluorine.

7. The non-aqueous electrolyte for a lithium secondary battery of claim 6, wherein R3 is hydrogen or a methyl group, and
R4 is -(CH₂)ₚ(CF₂)_{q}CHF₂,
wherein p is an integer of 1 to 3, and
q is an integer of 2 to 6.

8. The non-aqueous electrolyte for a lithium secondary battery of claim 6, wherein an amount of the compound represented by Formula 2 is in a range of 0.1 wt% to 10 wt% based on the total weight of the non-aqueous electrolyte.

9. The non-aqueous electrolyte for a lithium secondary battery of claim 1, wherein the nitrile-based solvent is succinonitrile.

10. The non-aqueous electrolyte for a lithium secondary battery of claim 1, wherein the organic solvent further comprises a carbonate-based solvent.

11. The non-aqueous electrolyte for a lithium secondary battery of claim 10, wherein a volume ratio of the nitrile-based solvent to the carbonate-based solvent is in a range of 90:10 to 97:3.

12. The non-aqueous electrolyte for a lithium secondary battery of claim 1, wherein a concentration of the lithium salt in an organic solution composed of the organic solvent and the lithium salt is in a range of 1.0 M to 6 M.

13. A lithium secondary battery comprising:
a positive electrode including a positive electrode active material;
a negative electrode including a negative electrode active material;
a separator disposed between the positive electrode and the negative electrode; and
the non-aqueous electrolyte for a lithium secondary battery of claim 1.

14. The lithium secondary battery of claim 13, wherein the negative electrode active material does not comprise a lithium metal.

15. The lithium secondary battery of claim 13, wherein the negative electrode active material consists of at least one selected from a carbon-based material; a silicon-based material; at least one metal selected from Sn, Zn, Mg, Cd, Ce, Ni, and Fe; alloys composed of the metals; oxides of the metals; and composites of the metals and carbon.

## Patentansprüche

1. Nichtwässriger Elektrolyt für eine Lithium-Sekundärbatterie, umfassend:
eine durch die Formel 1 dargestellte Verbindung;
ein organisches Lösungsmittel, enthaltend ein Lösungsmittel auf Nitrilbasis in einer Menge von 90 Vol.-% bis 100 Vol.-%; und
ein Lithiumsalz,
worin die Menge der durch die Formel 1 dargestellten Verbindung im Bereich von 2 Gew.-% bis 50 Gew.-% liegt, bezogen auf das Gesamtgewicht des nichtwässrigen Elektrolyten:
[Formel 1] R1-O-CH₂-R2
worin in der Formel 1
R1 und R2 Alkylgruppen mit 1 bis 8 Kohlenstoffatomen sind, die mit zumindest einem Fluor substituiert sind.

2. Nichtwässriger Elektrolyt für eine Lithium-Sekundärbatterie gemäß Anspruch 1, worin R1 eine Alkylgruppe mit 1 bis 5 Kohlenstoffatomen ist, die mit zumindest einem Fluor substituiert ist, und R2 eine Alkylgruppe mit 2 bis 6 Kohlenstoffatomen ist, die mit zumindest einem Fluor substituiert ist.

3. Nichtwässriger Elektrolyt für eine Lithium-Sekundärbatterie gemäß Anspruch 1, worin R1 -(CF₂)ₙCHF₂ ist und
R2 -(CF₂)ₘCHF₂ ist,
worin n eine ganze Zahl von 1 bis 4 ist und
m eine ganze Zahl von 2 bis 5 ist.

4. Nichtwässriger Elektrolyt für eine Lithium-Sekundärbatterie gemäß Anspruch 1, worin die durch die Formel 1 dargestellte Verbindung eine durch die Formel 1A Dargestellte ist:

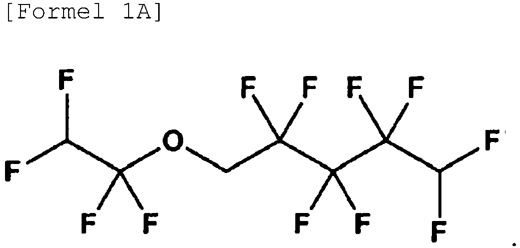

5. Nichtwässriger Elektrolyt für eine Lithium-Sekundärbatterie gemäß Anspruch 1, worin die Menge der durch die Formel 1 dargestellten Verbindung in einem Bereich von 3 Gew.-% bis 30 Gew.-% liegt, bezogen auf das Gesamtgewicht des nichtwässrigen Elektrolyten.

6. Nichtwässriger Elektrolyt für eine Lithium-Sekundärbatterie gemäß Anspruch 1, ferner umfassend eine durch die Formel 2 dargestellte Verbindung: 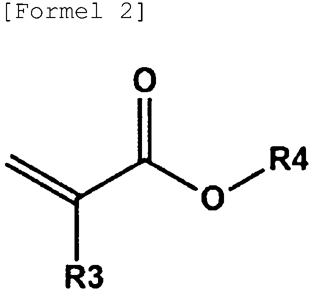 worin in der Formel 2
R3 Wasserstoff; oder eine Alkylgruppe mit 1 bis 5 Kohlenstoffatomen ist, und
R4 eine Alkylgruppe mit 1 bis 10 Kohlenstoffatomen ist, die mit zumindest einem Fluor substituiert ist.

7. Nichtwässriger Elektrolyt für eine Lithium-Sekundärbatterie gemäß Anspruch 6, worin R3 Wasserstoff oder eine Methylgruppe ist und
R4 -(CH₂)ₚ(CF₂)_{q}CHF₂ ist,
worin p eine ganze Zahl von 1 bis 3 ist und
q eine ganze Zahl von 2 bis 6 ist.

8. Nichtwässriger Elektrolyt für eine Lithium-Sekundärbatterie gemäß Anspruch 6, worin die Menge der durch die Formel 2 dargestellten Verbindung in einem Bereich von 0,1 Gew.-% bis 10 Gew.-% liegt, bezogen auf das Gesamtgewicht des nichtwässrigen Elektrolyten.

9. Nichtwässriger Elektrolyt für eine Lithium-Sekundärbatterie gemäß Anspruch 1, worin das Lösungsmittel auf Nitrilbasis Succinonitril ist.

10. Nichtwässriger Elektrolyt für eine Lithium-Sekundärbatterie gemäß Anspruch 1, worin das organische Lösungsmittel ferner ein Lösungsmittel auf Carbonatbasis umfasst.

11. Nichtwässriger Elektrolyt für eine Lithium-Sekundärbatterie gemäß Anspruch 10, worin das Volumenverhältnis des Lösungsmittels auf Nitrilbasis zu dem Lösungsmittel auf Carbonatbasis im Bereich von 90:10 bis 97:3 liegt.

12. Nichtwässriger Elektrolyt für eine Lithium-Sekundärbatterie gemäß Anspruch 1, worin die Konzentration des Lithiumsalzes in einer organischen Lösung, die aus dem organischen Lösungsmittel und dem Lithiumsalz aufgebaut ist, im Bereich von 1,0 M bis 6 M liegt.

13. Lithium-Sekundärbatterie, umfassend:
eine positive Elektrode, umfassend ein Positivelektroden-Aktivmaterial;
eine negative Elektrode, umfassend ein Negativelektroden-Aktivmaterial;
einen zwischen der positiven Elektrode und der negativen Elektrode vorgesehenen Separator; und
den nichtwässrigen Elektrolyten für eine Lithium-Sekundärbatterie gemäß Anspruch 1.

14. Lithium-Sekundärbatterie gemäß Anspruch 13, worin das Negativelektroden-Aktivmaterial kein Lithiummetall umfasst.

15. Lithium-Sekundärbatterie gemäß Anspruch 13, worin das Negativelektroden-Aktivmaterial aus zumindest einem besteht, das ausgewählt ist aus einem Material auf Kohlenstoffbasis; einem Material auf Siliciumbasis; zumindest einem Metall, ausgewählt aus Sn, Zn, Mg, Cd, Ce, Ni und Fe; Legierungen, die aus den Metallen aufgebaut sind; Oxiden der Metalle; und Komposite der Metalle und Kohlenstoff.

## Revendications

1. Électrolyte non aqueux pour une batterie secondaire au lithium, comprenant :
un composé représenté par la formule 1 ;
un solvant organique contenant un solvant à base de nitrile en une quantité de 90 % en volume à 100 % en volume ; et
un sel de lithium,
dans lequel une quantité du composé représenté par la formule 1 est dans une plage de 2 % en poids à 50 % en poids sur la base d'un poids total de l'électrolyte non aqueux :
[Formule 1] R1-O-CH₂-R2
dans lequel, dans la formule 1,
R1 et R2 sont des groupes alkyle présentant 1 à 8 atomes de carbone qui sont substitués par au moins un fluor.

2. Électrolyte non aqueux pour une batterie secondaire au lithium selon la revendication 1, dans lequel R1 est un groupe alkyle présentant 1 à 5 atomes de carbone qui est substitué par au moins un fluor, et R2 est un groupe alkyle présentant 2 à 6 atomes de carbone qui est substitué par au moins un fluor.

3. Électrolyte non aqueux pour une batterie secondaire au lithium selon la revendication 1, dans lequel R1 est -(CF₂)ₙCHF₂, et
R2 est -(CF₂)ₘCHF₂,
dans lequel n est un nombre entier allant de 1 à 4, et
m est un nombre entier allant de 2 à 5.

4. Électrolyte non aqueux pour une batterie secondaire au lithium selon la revendication 1, dans lequel le composé représenté par la formule 1 est l'un représenté par la formule 1A :

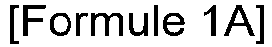

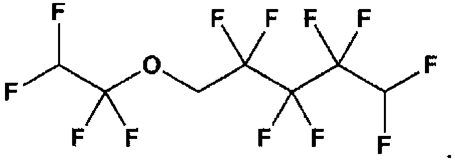

5. Électrolyte non aqueux pour une batterie secondaire au lithium selon la revendication 1, dans lequel la quantité du composé représenté par la formule 1 est dans une plage de 3 % en poids à 30 % en poids sur la base du poids total de l'électrolyte non aqueux.

6. Électrolyte non aqueux pour une batterie secondaire au lithium selon la revendication 1, comprenant en outre un composé représenté par la formule 2 : 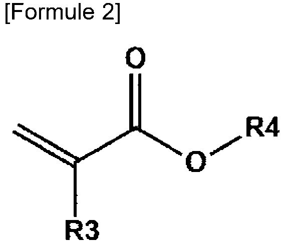 dans lequel, dans la formule 2,
R3 est un hydrogène ; ou un groupe alkyle présentant 1 à 5 atomes de carbone, et
R4 est un groupe alkyle présentant 1 à 10 atomes de carbone qui est substitué par au moins un fluor.

7. Électrolyte non aqueux pour une batterie secondaire au lithium selon la revendication 6, dans lequel R3 est un hydrogène ou un groupe méthyle, et
R4 est -(CH₂)ₚ(CF₂)_{q}CHF₂,
dans lequel p est un nombre entier allant de 1 à 3, et
q est un nombre entier allant de 2 à 6.

8. Électrolyte non aqueux pour une batterie secondaire au lithium selon la revendication 6, dans lequel une quantité du composé représenté par la formule 2 est dans une plage de 0,1 % en poids à 10 % en poids sur la base du poids total de l'électrolyte non aqueux.

9. Électrolyte non aqueux pour une batterie secondaire au lithium selon la revendication 1, dans lequel le solvant à base de nitrile est le succinonitrile.

10. Électrolyte non aqueux pour une batterie secondaire au lithium selon la revendication 1, dans lequel le solvant organique comprend en outre un solvant à base de carbonate.

11. Électrolyte non aqueux pour une batterie secondaire au lithium selon la revendication 10, dans lequel un rapport volumétrique du solvant à base de nitrile au solvant à base de carbonate est dans une plage de 90:10 à 97:3.

12. Électrolyte non aqueux pour une batterie secondaire au lithium selon la revendication 1, dans lequel une concentration en sel de lithium dans une solution organique composée du solvant organique et du sel de lithium est dans une plage de 1,0 M à 6 M.

13. Batterie secondaire au lithium comprenant :
une électrode positive incluant un matériau actif d'électrode positive ;
une électrode négative incluant un matériau actif d'électrode négative ;
un séparateur disposé entre l'électrode positive et l'électrode négative ; et
l'électrolyte non aqueux pour une batterie secondaire au lithium selon la revendication 1.

14. Batterie secondaire au lithium selon la revendication 13, dans laquelle le matériau actif d'électrode négative ne comprend pas de lithium métallique.

15. Batterie secondaire au lithium selon la revendication 13, dans laquelle le matériau actif d'électrode négative consiste en au moins un choisi parmi un matériau à base de carbone ; un matériau à base de silicium ; au moins un métal choisi parmi Sn, Zn, Mg, Cd, Ce, Ni et Fe ; des alliages composés des métaux ; des oxydes des métaux ; et des composites des métaux et du carbone.
